# EUROPEAN PATENT APPLICATION

(11) **EP 3 522 180 A1**
(43) Date of publication of application: **07.08.2019**
(21) Application number: 17856069.4
(22) Date of filing: 26.09.2017
(51) Int. Cl.: H01F 5/00, H01F 27/28, H01F 38/14, H02J 50/12

(54) **COIL UNIT FOR CONTACTLESS POWER SUPPLY**

(30) Priority: 28.09.2016 JP 2016189065
(71) Applicant: Nidec Corporation, Kyoto-shi, Kyoto 601-8205 (JP)
(72) Inventor: YAMAMOTO,Atsushi, Kyoto-shi Kyoto 601-8205 (JP)
(74) Representative: Stöckeler, Ferdinand
(86) International application number: PCT/JP2017/034606
(87) International publication number: WO 2018/062118

(57) **Abstract**

[Object] There is a problem that it is difficult to increase the voltage that can be applied to coils, and the amount of electric power that can be transmitted by a wireless power supply device cannot be increased.

[Solution] A contactless power supply coil unit according to one aspect of the present invention includes a plurality of coils that are wound around a predetermined center axis and a holding member that holds the plurality of coils. The coils are spirally wound in plan view. The plurality of coils are disposed so as to overlap in an axial direction and respectively form layers stacked in the axial direction. The coils forming adjacent layers are connected in series to each other. The holding member includes a core member extending in the axial direction. The core member includes a plurality of winding portions disposed along the axial direction. The plurality of the coils are respectively wound around the plurality of winding portions. The outer diameters of the plurality of winding portions each change monotonically along the axial direction.

## Description

### Technical Field

The present invention relates to a contactless power supply coil unit.

### Background Art

To date, a wireless power supply device that supplies power without a power cord is known. For example, PTL 1 discloses a structure in which a plurality of substrates, which have spiral-shaped grooves in which coil conductors are arranged, are stacked on each other in multiple layers.

### Citation List

### Patent Literature

PTL 1: Japanese Unexamined Patent Application Publication No. 2011-086890

### Summary of Invention

### Technical Problem

However, in the case of the above configuration, the intervals between stacked coils tends to be close. Therefore, when a voltage applied to the coils is increased, the potential difference between the coils increases with respect to the intervals between the coils forming adjacent layers, and a discharge phenomenon sometimes occurs between the coils. Therefore, there is a problem that it is difficult to increase the voltage that can be applied to the coils and the amount of electric power that can be transmitted by the wireless power supply device cannot be increased.

In view of the above problem, an object of the present invention is to provide a contactless power supply coil unit having a structure capable of suppressing the occurrence of a discharge phenomenon.

### Solution to Problem

A contactless power supply coil unit according to one aspect of the present invention includes a plurality of coils wound around a predetermined center axis and a holding member that holds the plurality of coils. The coils are spirally wound in plan view. The plurality of coils are disposed so as to overlap in an axial direction and respectively form layers stacked in the axial direction. The coils forming adjacent layers are connected in series to each other. The holding member includes a core member extending in the axial direction. The core member includes a plurality of winding portions disposed along the axial direction. The plurality of the coils are respectively wound around the plurality of winding portions. The outer diameters of the plurality of winding portions each change monotonically along the axial direction.

### Advantageous Effects of Invention

According to one aspect of the present invention, there is provided a contactless power supply coil unit having a structure capable of suppressing the occurrence of a discharge phenomenon.

### Brief Description of Drawings

Fig. 1 is a front view illustrating a contactless power supply coil unit according to the present embodiment.
Fig. 2 is a schematic diagram illustrating a circuit configuration of the contactless power supply coil unit of the present embodiment.
Fig. 3 is a plan view of a first winding portion and a first coil of the present embodiment as viewed from above.
Fig. 4 is a cross-sectional view illustrating a portion of the contactless power supply coil unit of the present embodiment.
Fig. 5 is a diagram illustrating a part of an assembly procedure for the contactless power supply coil unit of the present embodiment.
Fig. 6 is a diagram illustrating a part of the assembly procedure for the contactless power supply coil unit of the present embodiment.
Fig. 7 is a diagram illustrating a part of the assembly procedure for the contactless power supply coil unit of the present embodiment.

### Description of Embodiments

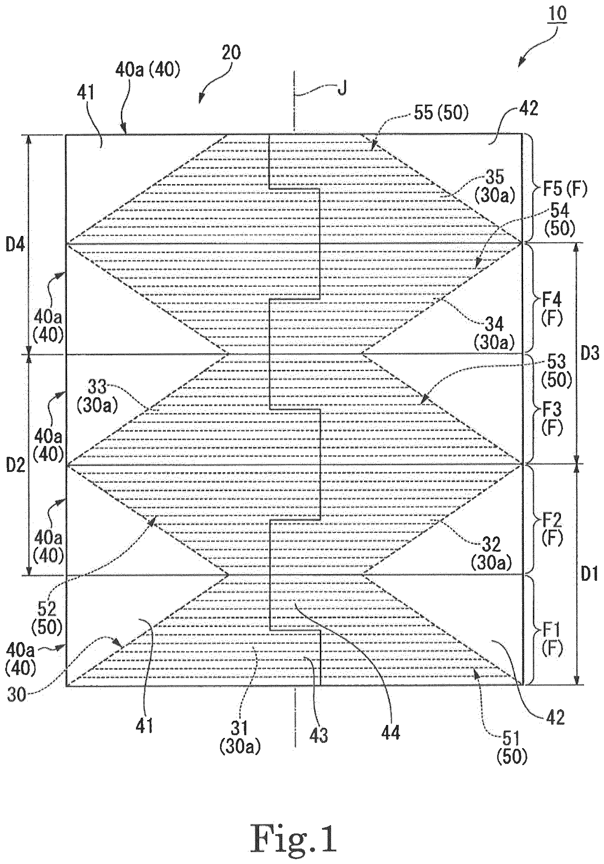

As illustrated in Fig. 1, a contactless power supply coil unit 10 of the present embodiment includes a plurality of coils 50 wound around a predetermined center axis J, and a holding member 20 that holds the plurality of coils 50. In Fig. 1, the center axis J extends in the up down direction. In the following description, a direction parallel to the center axis J will be simply referred to as "axial direction", a radial direction with the center axis J as a center will be simply referred to as "radial direction", and a circumferential direction with the center axis J as a center will be simply referred to as "circumferential direction". In addition, the upper side in the axial direction in Fig. 1 will be simply referred to as "upper side", and the lower side in the axial direction in Fig. 1 will be simply referred to as "lower side". In the present embodiment, the lower side corresponds to one axial-direction side. In the present embodiment, the upper side corresponds to the other axial-direction side. Further, it should be noted that the upper side and the lower side are simply terms for explaining the relative positional relationship between the respective parts and do not limit the actual arrangement relationship or the like.

The plurality of coils 50 are disposed so as to overlap in the axial direction and respectively form layers F stacked in the axial direction. The coils 50 of the present embodiment are, for example, provided as five coils, namely, a first coil 51 to a fifth coil 55. Five layers F formed by the first coil 51 to the fifth coil 55, namely, a first layer F1 to a fifth layer F5, are provided. The first coil 51 forms the first layer F1. A second coil 52 forms a second layer F2. A third coil 53 forms a third layer F3. A fourth coil 54 forms a fourth layer F4. The fifth coil 55 forms the fifth layer F5. The first coil 51, the second coil 52, the third coil 53, the fourth coil 54, and the fifth coil 55 are disposed in this order from the lower side to the upper side.

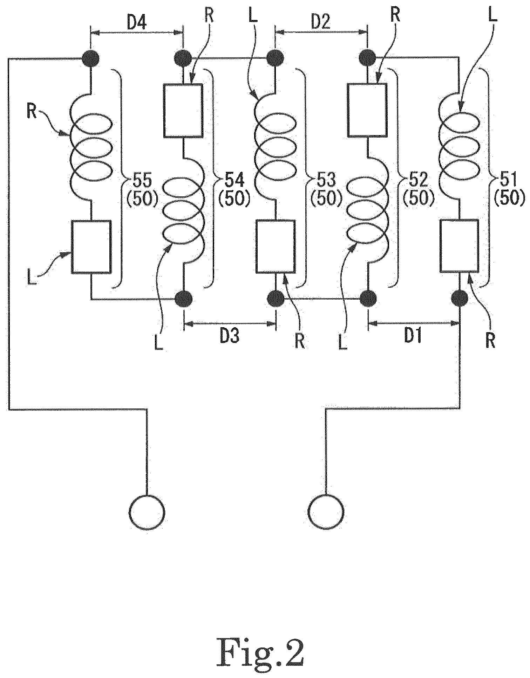

As illustrated in Fig. 2, the coils 50 forming the adjacent layers F are connected to each other in series. That is, in the present embodiment, the five coils 50 are connected in series in the order in which they are disposed in the axial direction. Each of the coils 50 has an inductance L and a resistance R. Although not illustrated, the five coils 50 connected in series are connected to a capacitor and an AC power source, and form an RLC series resonance circuit. The contactless power supply coil unit 10 of the present embodiment is used, for example, in a magnetic-field-resonance type contactless power supply device.

As illustrated in Fig. 1, the holding member 20 has a core member 30 extending in the axial direction. The core member 30 has a plurality of winding portions 30a disposed along the axial direction. The core member 30 of the present embodiment is formed by connecting five winding portions 30a. The winding portions 30a include first winding portions 31, 33, and 35 and second winding portions 32 and 34.

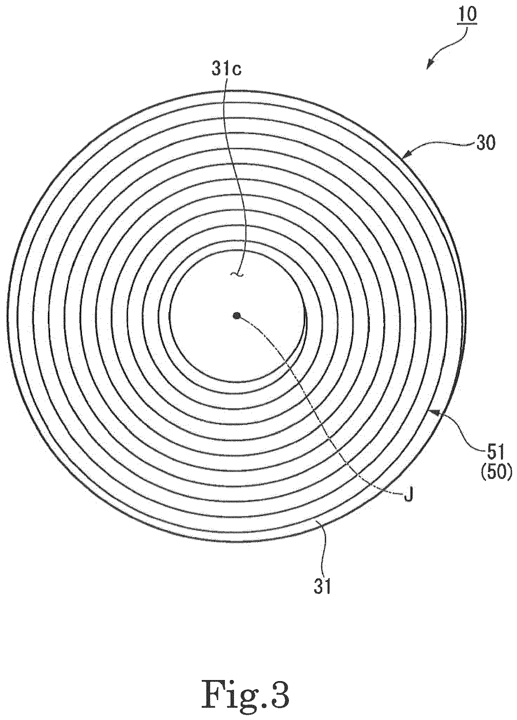

As illustrated in Fig. 1 and Fig. 3, the first winding portion 31 is a portion where the outer diameter of the core member 30 decreases from the lower side to the upper side. In the present embodiment, the shape of the first winding portion 31 is a truncated cone shape extending in the axial direction. The shape of the first winding portion 33 and the shape of the first winding portion 35 are the same as that of the first winding portion 31.

As illustrated in Fig. 1, the second winding portion 32 is a portion in which the outer diameter of the core member 30 increases going from the lower side to the upper side. The shape of the second winding portion 32 is the same as the shape of the first winding portion 31 except that it is turned upside down. That is, the shape of the second winding portion 32 is a truncated cone shape extending in the axial direction.

As described above, the outer diameters of the plurality of winding portions 30a monotonically change along the axial direction. In the present specification, "the outer diameter of the winding portion monotonically changes along the axial direction" includes the meaning that, for a single winding portion, the change in the outer diameter of the winding portion along one axial direction can be an increase or a decrease. Specifically, the outer diameters of the first winding portions 31, 33, and 35 of the present embodiment decrease monotonically from the lower side to the upper side. The outer diameters of the second winding portions 32 and 34 increase monotonically from the lower side to the upper side.

In addition, in the present specification, "the outer diameter of the winding portion monotonically changes along the axial direction" includes the meaning that, for a single winding portion, the winding portion includes a portion having an outer diameter that does not change partly along the axial direction. That is, for example, in the first winding portion 31, the outer diameter of which monotonically decreases from the lower side to the upper side, a portion that extends in the axial direction without changing the outer diameter may be provided. In addition, the rate of change of the outer diameter of the winding portion need not be monotonic. In the present embodiment, the outer diameter of the winding portion 30a changes monotonically with a constant rate of change along the axial direction.

The first winding portion 31, the second winding portion 32, the first winding portion 33, the second winding portion 34, and the first winding portion 35 extend from the lower side to the upper side in this order. That is, the first winding portions 31, 33, and 35 and the second winding portions 32 and 34 are provided alternately along the axial direction. The winding portions 30a that are adjacent in the axial direction are connected to each other. The outer diameters of the winding portions 30a adjacent in the axial direction are the same at the portions at which the winding portions 30a are connected to each other. More specifically, for example, the outer diameter of the portion where the first winding portion 31 and the second winding portion 32 are connected to each other, that is, the outer diameter of the upper end of the first winding portion 31 and the outer diameter of the lower end of the second winding portion 32 are the same. The outer diameter of the portion where the second winding portion 32 and the first winding portion 33 are connected to each other, that is, the outer diameter of the upper end of the second winding portion 32 and the outer diameter of the lower end of the first winding portion 33 are the same. In the present embodiment, the outer diameter of the core member 30 is a shape that periodically changes between the maximum value and the minimum value of the outer diameters of the winding portions 30a along the axial direction.

Further, in the present specification, the phrase "the outer diameters of the winding portions are the same" means that, in addition to the case where the outer diameters of the winding portions are strictly the same, it includes the case where the outer diameters are substantially the same.

The plurality of coils 50 are respectively wound around the plurality of winding portions 30a. Specifically, the first coil 51 is wound around the first winding portion 31. The second coil 52 is wound around the second winding portion 32. The third coil 53 is wound around the first winding portion 33. The fourth coil 54 is wound around the second winding portion 34. The fifth coil 55 is wound around the first winding portion 35. The coils 50 are respectively wound in the circumferential direction along the outer peripheral surfaces of the winding portions 30a. The axial positions at which the coils 50 in the winding portions 30a are respectively wound sequentially change in the axial direction each time the coils 50 are wound. In the present embodiment, the coils 50 are respectively spirally wound around the outer peripheral surfaces of the winding portions 30a.

As illustrated in Fig. 3, the coils 50 are spirally wound in plan view. That is, the shape of the first coil 51 wound around the first winding portion 31 in plan view is spiral. Although not illustrated, like the first coil 51, the second coil 52 to the fifth coil 55 have a spiral shape in plan view.

According to the present embodiment, the outer diameters of the winding portions 30a change monotonically along the axial direction. A conductive wire is wound in the circumferential direction along the outer peripheral surfaces of the winding portions 30a. By sequentially changing the winding position of the conductive wire in the axial direction, it is possible to easily manufacture the coils 50 having a spiral shape in plan view. In addition, the axial interval between the winding start and the winding end of the coils 50 can be increased by the axial-direction dimension of the winding portions 30a.

Here, when the conductive wire forming the coils 50 starts to be wound from the first coil 51, the potential difference between the coils 50 of the adjacent layers F is greatest between the winding start of the coil 50 on the lower side and the winding end of the coil 50 on the upper side among the coils 50 that are adjacent to each other in the axial direction. Specifically, the potential difference between the first coil 51 and the second coil 52 becomes largest between the winding start of the first coil 51 and the winding end of the second coil 52. That is, by increasing the interval D1 between the winding start of the first coil 51 and the winding end of the second coil 52 illustrated in Fig. 1 and Fig. 2, it is possible to suppress a discharge phenomenon from occurring between the first coil 51 and the second coil 52.

In the present embodiment, the winding start of the first coil 51 is the lower end of the first winding portion 31 and the winding end of the second coil 52 is the upper end of the second winding portion 32. That is, as illustrated in Fig. 1, the interval D1 corresponds to the axial-direction dimension between the lower end of the first winding portion 31 and the upper end of the second winding portion 32. Accordingly, the interval D1 can be set to a length obtained by adding the axial-direction dimension of the first winding portion 31 and the axial-direction dimension of the second winding portion 32, which can be increased. The interval D2 between the winding start of the second coil 52 and the winding end of the third coil 53, the interval D3 between the winding start of the third coil 53 and the winding end of the fourth coil 54, the interval D4 between the winding start of the fourth coil 54 and the winding end of the fifth coil 55 can also be increased in the same manner. Therefore, according to the present embodiment, the occurrence of a discharge phenomenon between the coils 50 that are adjacent to each other can be suppressed, As a result, the voltage applied to the coils 50 can be increased, and the amount of electric power that can be transmitted by the contactless power supply device in which the contactless power supply coil unit 10 is mounted can be increased. In the present embodiment, the intervals D1 to D4 are, for example, the same.

In addition, when the number of coils connected in series is increased, the potential difference between the coil on one end side and the coil on the other end side increases. Therefore, there is a case where the intervals between the coils that are adjacent to each other cannot be made sufficiently large with respect to the potential difference between the coil on one end side and the coil on the other end side.

On the other hand, according to the present embodiment, because the intervals D1 to D4 between the coils 50 that are adjacent to each other can be increased, the intervals between the coils 50 can also be increased. In other words, the potential difference becomes largest between the winding start of the first coil 51 and the winding end of the fifth coil 55, but the interval between the winding start of the first coil 51 and the winding end of the fifth coil 55 can be increased by an amount corresponding to the sum of the axial-direction dimensions of the five winding portions 30a. Therefore, even when the number of the coils 50 connected in series is increased, the occurrence of a discharge phenomenon can be suppressed. Therefore, the number of the coils 50 connected in series can be increased, and the amount of electric power that can be transmitted by the contactless power supply device in which the non-contact power supply coil unit 10 is mounted can be increased.

In addition, according to the present embodiment, the first winding portions 31, 33, and 35 and the second winding portions 32 and 34 are alternately provided along the axial direction. For example, when winding starts from the first coil 51, the first coil 51 is produced by winding a conductive wire from the lower end to the upper end of the first winding portion 31. In this case, the first coil 51 that has a spiral shape is wound from the radial-direction outer side to the radial-direction inner side. On the other hand, when the second coil 52 is manufactured by winding the conductive wire from the lower end to the upper end of the second winding portion 32, the second coil 52, which has a spiral shape, is wound from the radial-direction inner side to the radial-direction outer side. Therefore, when the coils 50 are manufactured by being wound sequentially along the axial direction, the winding start position can be alternated between the radial-direction inner side and the radial-direction outer side. As a result, after winding the first coil 51 from the radial-direction outer side to the radial-direction inner side, because it is possible to start winding the second coil 52 from the radial-direction inner side as is, the winding of the plurality of coils 50 is facilitated.

In addition, according to the present embodiment, the outer diameters of the winding portions 30a that are adjacent to each other in the axial direction are the same at the portions at which the winding portions 30a are connected to each other. Therefore, after winding the first coil 51, it is possible to start winding the second coil 52 with the coil diameter as is, so it is easy to wind the coils 50 continuously.

In addition, according to the present embodiment, the shape of each of the winding portions 30a is a truncated cone shape extending in the axial direction. Therefore, it is easy to wind the coils 50 around the winding portions 30a.

In the present embodiment, each of the plurality of winding portions 30a is a separate member. Therefore, it is possible to employ a method in which one of the coils 50 is wound around one of the winding portions 30a, then another one of the winding portions 30a is connected and the next one of the coils 50 is wound. Therefore, as compared with the case where the core member 30 is a single member, it is easy to wind the plurality of coils 50.

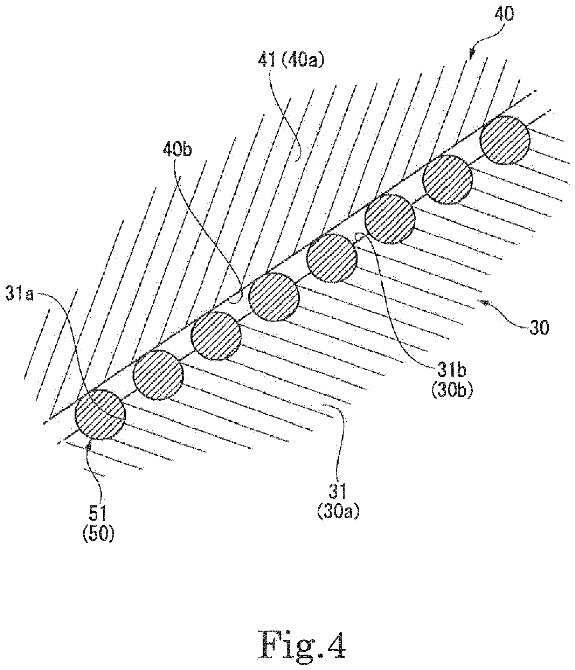

As illustrated in Fig. 4, the first winding portion 31 has a groove 31a recessed from a radial-direction outer side surface 31b toward the radial-direction inner side. The groove 31a extends along the circumferential direction. In the present embodiment, for example, the groove 31a extends spirally along the outer circumferential surface of the first winding portion 31 from a lower end portion of the first winding portion 31 to an upper end portion thereof. The first coil 51 is wound along the groove 31a. Although not illustrated, the same applies to the first winding portions 33 and 35 and the second winding portions 32 and 34. That is, the winding portions 30a have a groove recessed from the radial-direction outer side to the radial-direction inner side, and the coils 50 are wound along the groove. Therefore, because the conductive wire can be guided by the groove, it is easy to wind the coils 50 around the winding portions 30a. In addition, by adjusting the number of turns of the groove to the number of turns of the coils 50, there is no need to count the number of turns when winding the coils 50, which is convenient.

As illustrated in Fig. 1, the holding member 20 includes a cylindrical member 40. The cylindrical member 40 has a cylindrical shape that surrounds the core member 30 from the radial-direction outer side of the coils 50. In the present embodiment, the cylindrical member 40 has a cylindrical shape centered on the center axis J and opening at both axial ends. The inner diameter of the cylindrical member 40 cyclically increases and decreases along the axial direction. As illustrated in Fig. 4, the shape of a radial-direction-inner-side surface 40b of the cylindrical member 40 is the shape along a radial-direction-outer-side surface 30b of the core member 30. As a result, the coils 50 can be held down from the radial-direction outer side by the cylindrical member 40, and the coils 50 can be prevented from coming off from the core member 30. In the present embodiment, the radial-direction-inner-side surface 40b of the cylindrical member 40 is in contact with the coils 50.

As illustrated in Fig. 1, the cylindrical member 40 has a plurality of cylindrical portions 40a. The plurality of cylindrical portions 40a are disposed along the axial direction and surround the winding portions 30a, respectively. The plurality of cylindrical portions 40a are separate members, and the cylindrical portions 40a adjacent to each other in the axial direction are connected to each other. Therefore, each time one of the coils 50 is wound around one of the winding portions 30a, the one of the coils 50 can be pressed by a corresponding one of the cylindrical portions 40a. As a result, in a state where the one of the coils 50 that is already wound is pressed by a corresponding one of the cylindrical portions 40a, the next one of the coils 50 can be wound. Therefore, according to this configuration, the plurality of coils 50 can be stably wound in order.

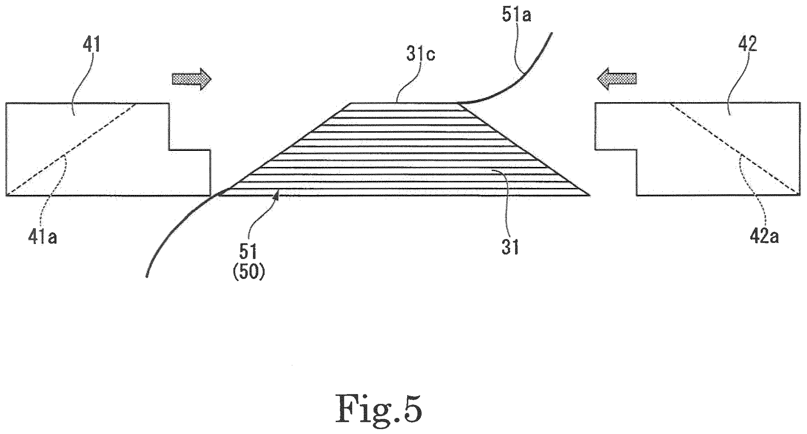

Each of the cylindrical portions 40a is formed by connecting a plurality of cylindrical portion pieces divided in the circumferential direction. In the present embodiment, each of the cylindrical portions 40a is formed by connecting two cylindrical portion pieces 41 and 42. Therefore, as illustrated in Fig. 5, after each of the coils 50 is wound around a corresponding one of the winding portions 30a, it is possible to form the cylindrical portion 40a that holds down the coil 50 by bringing the cylindrical portion piece 41 and the cylindrical portion piece 42 together from the radial-direction outer side of the winding portion 30a and combining them. Therefore, it is easy to attach the cylindrical portions 40a to the winding portions 30a and hold down the coils 50.

As illustrated in Fig. 1, each of the cylindrical portion pieces 41 has a first projecting portion 43 that protrudes to one side in the circumferential direction. The first projecting portion 43 is provided at a one-axial-direction side end portion of a one-circumferential-direction-side end portion of the cylindrical portion piece 41. In the cylindrical portion 40a surrounding the first winding portion 31 illustrated in Fig. 1, the first projecting portion 43 is provided at a lower side end portion of the one-circumferential-direction-side end portion of the cylindrical portion piece 41. The cylindrical portion piece 42 has a second projecting portion 44 projecting to the other circumferential-direction side. The second projecting portion 44 is provided on the other axial-direction side end portion of an other-circumferential-direction-side end portion of the cylindrical portion piece 42. In the cylindrical portion 40a surrounding the first winding portion 31 illustrated in Fig. 1, the second projecting portion 44 is provided at an upper-side end portion of the other-circumferential-direction-side end portion of the cylindrical portion piece 41. The first projecting portion 43 and the second projecting portion 44 are engaged with each other. As a result, it is possible to stably connect the cylindrical portion piece 41 and the cylindrical portion piece 42.

Although not illustrated, the holding member 20 has a magnetic core. The magnetic core extends in the axial direction and is made to pass through the coils 50. For example, the magnetic core is embedded and fixed in the core member 30. The magnetic core is, for example, a ferrite core. By providing the magnetic core, it is possible to improve the power transmission efficiency of the contactless power supply device in which the contactless power supply coil unit 10 is mounted.

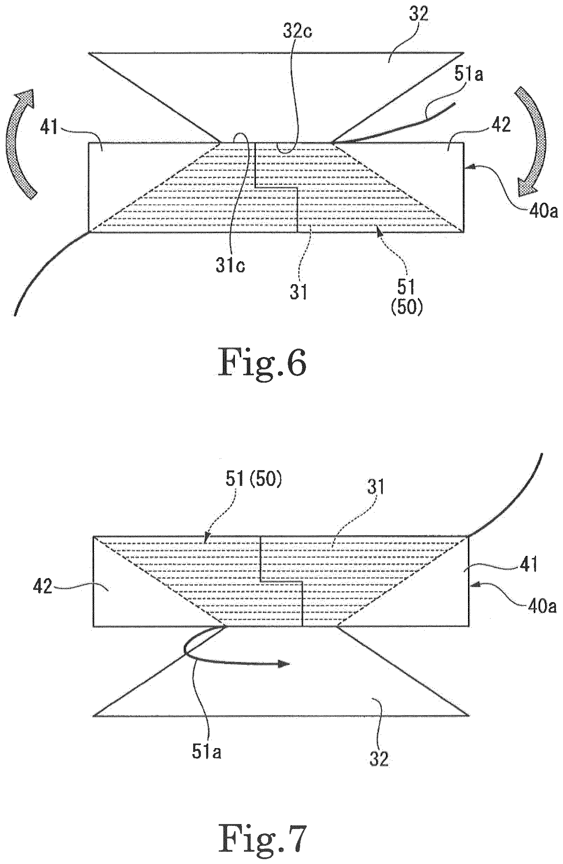

Next, a method of assembling the contactless power supply coil unit 10 of the present embodiment will be described. As illustrated in Fig. 5, the assembler winds a conductive wire around the first winding portion 31 from the lower side to the upper side, and creates the first coil 51. Then, the assembler brings the cylindrical portion piece 41 and the cylindrical portion piece 42 toward the first winding portion 31 from the radial-direction outer side, and combines them as illustrated in Fig. 6. As a result, the cylindrical portion 40a is produced, and the first coil 51 is pressed from the radial-direction outer side. At this time, a conductive wire portion 51a on the winding end side of the first coil 51 is drawn from the upper opening of the cylindrical portion 40a to the outside of the cylindrical portion 40a.

The assembler fixes a lower surface 32c of the second winding portion 32 to an upper surface 31c of the first winding portion 31 and fixes the first winding portion 31 and the second winding portion 32 to each other. Then, the assembler turns the assembly, in which the first winding portion 31, the first coil 51, the cylindrical portion 40a, and the second winding portion 32 are assembled, upside down. As illustrated in Fig. 7, the assembler winds the conductive wire portion 51a around the second winding portion 32 from the upper side to the lower side in Fig. 7, that is, from the lower side to the upper side in Fig. 1, and the second coil 52 is manufactured. Thereafter, similarly to the first coil 51, the second coil 52 is pressed by the cylindrical portion 40a, and then the assembly is turned upside down, and the first winding portion 33 is fixed to the upper end of the second winding portion 32. Then, the assembler winds the conductive wire around the first winding portion 33 to manufacture the third coil 53. Subsequently, the same procedure as described above is repeated to assemble the contactless power supply coil unit 10.

The present invention is not limited to the embodiments described above, and other configurations may be adopted. Some of the intervals D1 to D4 between the coils 50 that are adjacent in the axial direction may be different values or all of them may be different from each other. The intervals between the coils 50 that are adjacent to each other in the axial direction may be increased as the intervals are located progressively toward the upper side. That is, the interval D1, the interval D2, the interval D3 and the interval D4 may increase in this order. According to this configuration, because the intervals between the coils 50 having a larger potential difference can be further increased, the occurrence of a discharge phenomenon can be further suppressed. In addition, the number of the coils 50 may be two or more, four or less, or six or more.

In addition, the plan view shape of the coils 50 is not particularly limited as long as the coils 50 are wound around the center axis J, and may be an elliptical annular shape or a polygonal annular shape. In addition, the plan view shape of the core member 30 and the plan view shape of the winding portions 30a can be appropriately changed in accordance with the plan view shape of the coils 50.

In addition, all of the plurality of winding portions 30a may be the first winding portions, or all of the plurality of winding portions 30a may be the second winding portions. In addition, the shape of the winding portions 30a is not particularly limited as long as the outer diameter monotonically changes along the axial direction. In addition, the number of the winding portions 30a may be two or more, four or less, or six or more. The groove extending in the circumferential direction of the winding portion 30a may be provided in a plurality along the axial direction. In addition, the groove extending in the circumferential direction of the winding portion 30a may be provided in a plurality along the circumferential direction. In addition, the winding portions 30a need not be provided.

In addition, each of the plurality of cylindrical portions 40a may be a single member. In addition, each of the cylindrical members 40 may be a single member. In addition, the cylindrical members 40 may be formed by connecting a single member, in which a plurality of the cylindrical portion pieces 41 are connected to each other in the axial direction, and a single member, in which a plurality of cylindrical portion pieces 42 are connected to each other in the axial direction, to each other. In addition, the cylindrical members need not be provided.

The application of the contactless power supply apparatus in which the contactless power supply coil unit is mounted according to the above embodiment is not particularly limited, and may be used, for example, for power supply for an automatic guided vehicle.

Each of the above-described configurations can be appropriately combined to the extent they are not inconsistent with each other.

### (Feature 1)

A contactless power supply coil unit includes a plurality of coils that are wound around a predetermined center axis and a holding member that holds the plurality of coils, the coils being spirally wound in plan view, the plurality of coils being disposed so as to overlap in an axial direction and respectively forming layers stacked in the axial direction, the coils forming adjacent layers being connected in series to each other, the holding member including a core member extending in the axial direction, the core member including a plurality of winding portions disposed along the axial direction, the plurality of coils being respectively wound around the plurality of winding portions, and the outer diameters of the plurality of winding portions each changing monotonically along the axial direction.

### (Feature 2)

In the contactless power supply coil unit according to Feature 1, the winding portions may include first winding portions in which the outer diameter of the core member decreases from one axial-direction side toward the other axial-direction side and second winding portions in which the outer diameter of the core member increases from the one axial-direction side toward the other axial-direction side, the first winding portions and the second winding portions being provided alternately along the axial direction.

### (Feature 3)

In the contactless power supply coil unit according to Feature 2, the winding portions that are adjacent to each other in the axial direction may be connected to each other, and the outer diameters of the winding portions that are adjacent to each other in the axial direction may be the same at the portions where they are connected to each other.

### (Feature 4)

In the contactless power supply coil unit according to any one of Features 1 to 3, each of the plurality of winding portions may be a separate member.

### (Feature 5)

In the contactless power supply coil unit according to any one of Features 1 to 4, the holding member may have a cylindrical member that has a cylindrical shape and that surrounds the core member from the radial-direction outer side of the coils, and the shape of the radial-direction-inner-side surface of the cylindrical member is a shape along the radial-direction-outer-side surface of the core member.

### (Feature 6)

In the contactless power supply coil unit according to Feature 5, the cylindrical member may include a plurality of cylindrical portions respectively surrounding the winding portions, the plurality of cylindrical portions being separate members, and the cylindrical portions being formed by connecting a plurality of cylindrical portion pieces divided in a circumferential direction.

### (Feature 7)

In the contactless power supply coil unit according to any one of Features 1 to 6, the winding portions may respectively have grooves recessed from a radial-direction outer side surface toward the radial-direction inner side, the grooves extending along the circumferential direction, and the coils being wound along the grooves, respectively.

### (Feature 8)

In the contactless power supply coil unit according to any one of Features 1 to 7, the shape of the winding portions may be a truncated cone shape extending in the axial direction.

### Reference Signs List

- 10: contactless power supply coil unit
- 20: holding member
- 30: core member
- 30a: winding portions
- 31, 33, 35: first winding portions
- 31a: groove
- 32,: 34 second winding portions
- 40: cylindrical member
- 40a: cylindrical portions
- 50: coils
- F: layers
- J: center axis

## Claims

1. A contactless power supply coil unit comprising:
a plurality of coils that are wound around a predetermined center axis, and
a holding member that holds the plurality of coils,
wherein the coils are spirally wound in plan view,
wherein the plurality of coils are disposed so as to overlap in an axial direction and respectively form layers stacked in the axial direction.
wherein the coils forming adjacent layers are connected in series to each other,
wherein the holding member includes a core member extending in the axial direction,
wherein the core member includes a plurality of winding portions disposed along the axial direction,
wherein the plurality of the coils are respectively wound around the plurality of winding portions, and
wherein the outer diameters of the plurality of winding portions each change monotonically along the axial direction.

2. The contactless power supply coil unit according to Claim 1,
wherein the winding portions include
first winding portions in which the outer diameter of the core member decreases from one axial-direction side toward the other axial-direction side, and
second winding portions in which the outer diameter of the core member increases from the one axial-direction side toward the other axial-direction side,
wherein the first winding portion and the second winding portion are provided alternately along the axial direction.

3. The contactless power supply coil unit according to Claim 2,
wherein the winding portions that are adjacent to each other in the axial direction are connected to each other, and the outer diameters of the winding portions that are adjacent to each other in the axial direction are the same at the portions where they are connected to each other.

4. The contactless power supply coil unit according to any one of Claims 1 to 3,
wherein each of the plurality of winding portions is a separate member.

5. The contactless power supply coil unit according to any one of Claims 1 to 4,
wherein the holding member has a cylindrical member that has a cylindrical shape and that surround the core member from the radial-direction outer side of the coils,
wherein the shape of the radial-direction-inner-side surface of the cylindrical member is a shape along the radial-direction-outer-side surface of the core member.

6. The contactless power supply coil unit according to Claim 5,
wherein the cylindrical member includes a plurality of cylindrical portions respectively surrounding the winding portions, the plurality of cylindrical portions being separate members, and the cylindrical portions being formed by connecting a plurality of cylindrical portion pieces divided in a circumferential direction.

7. The contactless power supply coil unit according to any one of Claims 1 to 6,
wherein the winding portions respectively have grooves recessed from a radial-direction outer side surface toward the radial-direction inner side, the grooves extending along the circumferential direction, and the coils being wound along the grooves, respectively.

8. The contactless power supply coil unit according to any one of Claims 1 to 7,
wherein a shape of the winding portions may be a truncated cone shape extending in the axial direction.
